# EUROPEAN PATENT APPLICATION

(11) **EP 3 104 056 A1**
(43) Date of publication of application: **14.12.2016**
(21) Application number: 15382301.8
(22) Date of filing: 09.06.2015
(51) Int. Cl.: F16L 37/14

(54) **CONNECTOR FOR FLUID CONDUCTION**

(71) Applicant: J.Juan S.A., 08850 Gavá (ES)
(72) Inventor: García Blanco, Joaquín, 08860 Castelldefels (ES)
(74) Representative: Carvajal y Urquijo, Isabel

(57) **Abstract**

A connector for fluid conduction, which comprises a first connection end (20) and a second connection end (30) respectively associated with a first and a second element of a system, both ends (20, 30) being designed to be connected according to an axial axis (X). The first connection end (20) comprises a circular groove (21), concentric to the axial axis (X), which makes up a first recess (22). The second connection end (30) comprises a connector hole (31), perpendicular to the axial axis (X), which makes up a second recess (32) facing the first recess (22) when both ends (20, 30) are connected, and a retaining element (40) designed to be inserted through the connector hole (31) and be housed between the first recess (22) and the second recess (32) to keep the first connection end (20) attached to the second connection end (30).

## Description

### Field of the invention

The present invention relates to a connector for fluid conduction, both liquid and gaseous, specially designed for braking, cooling or damping systems, in vehicles, among other systems in general.

### Background of the invention

The connectors for fluid conduction in the aforementioned systems must ensure the correct fluid supply to the different components of the system, while they are subject at the same time, to the working pressure and possible excess pressures, to avoid any malfunction or leakage that may affect the correct operation of the system and/or put the safety of the users at risk.

Generally, these systems comprise a significant number of connections between the various components thereof. For example, between two elements for conveying a fluid (rigid tubes, flexible hoses, etc.), between a conveying element and a functional element (hydraulic pump, brake caliper, damper, ABS: etc.), among other connections. Furthermore, as vehicles become more and more complex, it is becoming more and more difficult and complex to integrate these systems therein. The lack of space, the diversity of elements to be connected, or the high number of connections to be made significantly hamper the assembly operations for such systems.

The object of the present invention is a connector for fluid conduction, either liquid or gaseous, which facilitates the connection between the elements of the system during the assembly thereof to the vehicle, in a simple, quick and safe manner, which design is easily adaptable to the different components of the system. All of this without forgoing the important features and high efficiency that are to be demanded of this type of connectors, and being able to withstand peaks of pressure exceeding 700 bar.

### Description of the invention

The connector for fluid conduction of the present invention comprises:
- a first connection end associated with a first element of a system; and
- a second connection end associated with a second element of the system.

The first connection end is designed to be inserted into the second connection end, according to an axial axis, thereby connecting both ends. The first and the second element of the system may be either two elements for conveying the fluid (rigid tubes, flexible hoses, etc.) connected to one another, or an element for conveying the fluid connected to a functional element (hydraulic pump, brake caliper, damper, ABS, etc.), among other elements.

The first connection end comprises:
- a circular groove, concentric to the axial axis, which makes up a first recess. Likewise, the second connection end comprises:
- a connector hole, perpendicular to the axial axis, which makes up a second recess that faces the first recess when both ends are connected, and
- a retaining element designed to be inserted through the connector hole and be housed between the first recess and the second recess to keep the first connection end attached to the second connection end when both ends are connected.

Preferably, the first connecting end comprises a first stop designed to stop the insertion of the first connecting end into the second connecting end, and position the first recess facing the second recess. In this way, it is possible to ensure that once the first connection end is inserted, both recesses face one another. Therefore, when the retaining element is inserted, it is housed between the first recess and the second recess, preventing from that moment on both connection ends from separating from one another.

The retaining element is housed between the first recess and the second recess being it possible to leave a small clearance, for example, of 1 mm, which makes it possible a relative rotating movement between the first end and the second connection end. In this way, the connection ends can be connected in any position, thus avoiding the need to twist the rigid tubes or the flexible hoses when mounting the circuit. This aspect facilitates considerably the mounting of the system. Once the working fluid has been inserted into the circuit, the system acquires pressure, causing a small relative axial movement between both connection ends to compensate the aforementioned clearance. As long as the pressure of the system is maintained both ends are immobile with respect to one another.

In order to ensure the air-tightness of the connector when both ends are connected, preferably the first connection end comprises one or more circular slots, concentric to the axial axis, which house one or more O-rings made for example, of synthetic rubber, thermostable plastic materials, or thermoplastic materials.

When the first element of the system consists of a flexible hose or similar conveying element, preferably the first connection end comprises a first pipette-shaped attaching terminal to facilitate the attachment thereof, combining the same for example with a pressed fixing bush. When the first element of the system consists of a rigid tube or similar conveying element, it can be directly threaded or welded to the first connection end.

Preferably, the second connecting end comprises a second stop designed to stop the insertion of the first connecting end into the second connecting end, and position the first recess facing the second recess. Said second stop works together with the first stop to prevent the first connection end from advancing.

According to a particular embodiment, specifically for the connection between two elements used to convey the fluid, such as, for example, two flexible tubes, the first connection end and the second connection end may be in a floating arrangement after being connected. In order to avoid possible unwanted movements of said connection, preferably the second connection end comprises an intermediate fastening block with fixing means, such as screws or clips, that make it possible fixing thereof to an intermediate connection point. In this way, the floating connection can be fixed to an intermediate connection point, such as the frame or chassis of a vehicle, so said movements do not take place.

In order to simplify the design of the connector, preferably the connector hole passes through the intermediate fastening block to make it possible fixing the retaining element to the intermediate connection point. In other words, the retaining element itself that prevents the connection ends from becoming separated is also used for fixing the intermediate fastening block.

When the second element of the system consists of a flexible hose or similar conveying element, preferably the second connection end comprises a second pipette-shaped attaching terminal to facilitate the attachment thereof, combining the same for example with a pressed fixing bush. When the second element of the system consists of a rigid tube or similar conveying element, it can be directly threaded or welded to the second connection end.

Preferably, the second connection end comprises a perimeter widening around the axial axis in which the connector hole is arranged. In this way, the retaining element is better protected and mounted in a more robust manner, thus ensuring a safer connection.

As retaining element, it is possible to use any type of screw, pin, bolt, rod, key, or other similar mechanical fixing elements, which would work together with threaded connector holes, machinings, bores or drills, as the case may be.

According to a particular case, it is possible to use other mechanical fixing elements by way of retaining element, such as flanges, clips or resilient clamps. To this end, the retaining element comprises a through-end from which an enveloping end extends, making up a clamp, clip or flexible flange, wherein said through-end is designed to be inserted into the connector hole, and said enveloping end is designed to press against the first fixing end. Likewise, the second connection end comprises a third recess designed to receive the enveloping end, and work together with the same to secure the position of the retaining element.

### Brief description of the drawings

What follows is a very brief description of a series of drawings that aid in better understanding the invention, and which are expressly related to four embodiments of said invention that are presented by way of non-limiting examples of the same.
Figure 1 represents a perspective view of the connector, according to a first preferred embodiment, in which the connection between an element for conveying a fluid and a connection port of a functional element of the system is shown.
Figure 2 represents a longitudinal section of the connector of figure 1.
Figure 3 represents a perspective view of the first connection end of figure 1.
Figure 4 represents a longitudinal view of the first connection end of figure 1.
Figure 5 represents a perspective view of the connector, according to a second preferred embodiment, in which the connection between two elements for conveying a fluid that integrate a fastening flange for fixing thereof to the chassis of the vehicle or to any other intermediate fastening point, is shown.
Figure 6 represents a longitudinal section of the connector of figure 5.
Figure 7 represents a perspective view of the first connection end of figure 5.
Figure 8 represents a longitudinal section of the first connection end of figure 5.
Figure 9 represents a perspective view of the second connection end of figure 5.
Figure 10 represents a longitudinal section of the second connection end of figure 5.
Figure 11 represents a cross-section of the connector along the cutting line A-A of figure 6, fixed to the intermediate fastening point.
Figure 12 represents a perspective view of the connector, according to a third preferred embodiment, in which a connection between two elements for conveying a fluid that does not require a fastening block for fixing thereof to the chassis of the vehicle or to any other intermediate fastening point of said vehicle, is shown.
Figure 13 represents a longitudinal section of the connector of figure 12.
Figure 14 represents a perspective view of the first connection end of figure 12.
Figure 15 represents a longitudinal section of the first connection end of figure 12.
Figure 16 represents a perspective view of the second connection end of figure 12.
Figure 17 represents a longitudinal section of the second connection end of figure 12.
Figure 18 represents a perspective view of the connector, according to a fourth preferred embodiment, in which the connection between two elements for conveying a fluid by means of a retaining element of the clamp type, is shown.
Figure 19 represents a longitudinal section of the connector of figure 18.
Figure 20 represents a cross-section of the connector along the cutting line B-B of figure 19.
Figure 21 represents a perspective view of the retaining element of figure 18.
Figure 22 represents a perspective view of the first connection end of figure 18.
Figure 23 represents a longitudinal section of the first connection end of figure 18.
Figure 24 represents a perspective view of the second connection end of figure 18.
Figure 25 represents a longitudinal section of the second connection end of figure 18.

### Detailed description of the invention

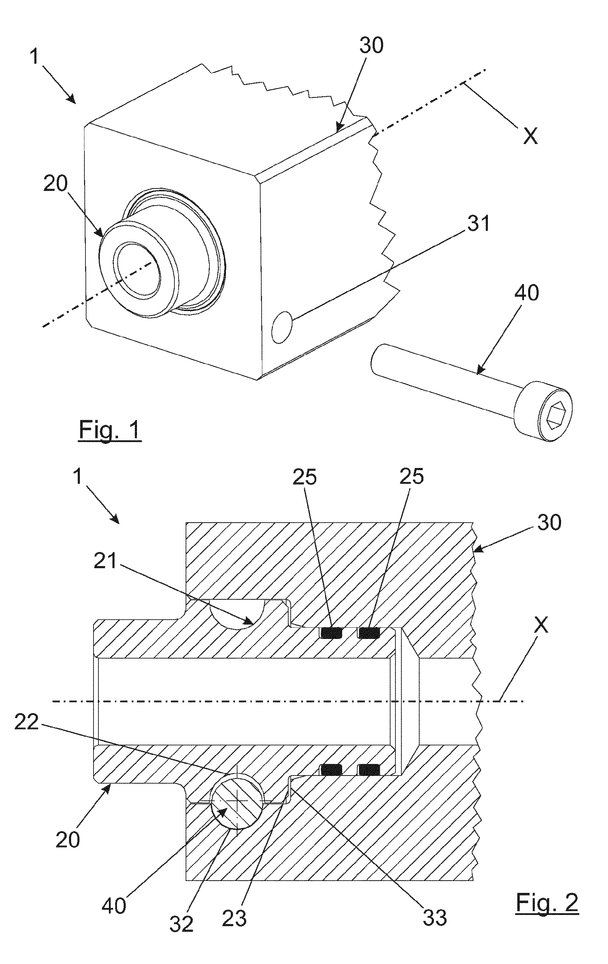

Figure 1 shows a perspective view of the connector, according to a first preferred embodiment, in which the connection between an element for conveying a fluid and a connection port of a functional element of a system, is shown.

As can be appreciated, the connector (1) comprises:
- a first connection end (20) associated with a first element of the system (in this case a first rigid tube, not shown, for conveying the fluid); and
- a second connection end (30) associated with a second element of the system (in this case a connection port of a functional element of the system).

The first connection end (20) is designed to be inserted into the second connection end (30), according to an axial axis (X) to connect both ends (20, 30).

Figure 2 shows a longitudinal section of the connector (1) of figure 1, wherein the connection between both connection ends (20, 30) can be appreciated in further detail.

As can be appreciated, the first connection end (20) comprises:
- a circular groove (21), concentric to the axial axis (X), which makes up a first recess (22) having a semicircular transverse cross-section.

Likewise, the second connection end (30) comprises:
- a connector hole (31), perpendicular to the axial axis (X), which makes up a second recess (32) facing the first recess (22) when both ends (20, 30) are connected; and
- a retaining element (40) designed to be inserted through the connector hole (31) and be housed between the first recess (22) and the second recess (32) to keep the first connection end (20) attached to the second connection end (30) when both ends (20, 30) are connected,

As can be appreciated, the retaining element (40) prevents both connection ends (20, 30) from becoming separated.

The first connecting end (20) comprises a first stop (23) designed to stop the insertion of the first connecting end (20) into the second connecting end (30), and position the first recess (22) facing the second recess (32). In this way, it is possible to ensure that once the first connection end (20) is inserted, both recesses (22, 32) face one another.

The second connection end (30) comprises a second stop (33) designed to stop the insertion of the first connection end (20) into the second connection end (30), and position the first recess (22) facing the second recess (32). Said second stop (33) works together with the first stop (23) to prevent the first connection end from advancing (20).

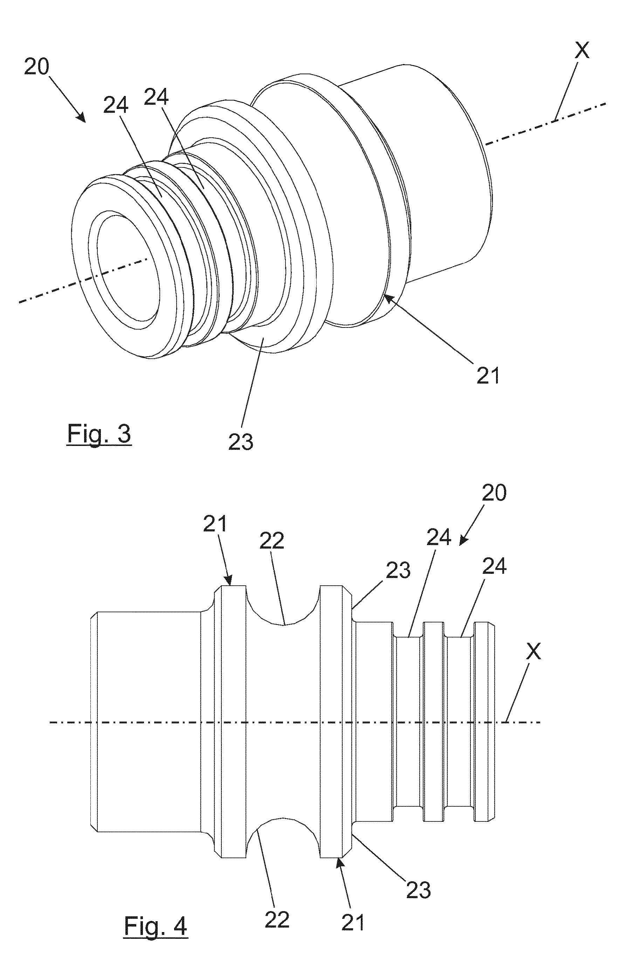

Figures 3 and 4 show two views of the first connection end (20) of figure 1. As can be appreciated, to ensure the air-tightness of the connector (1) when both ends (20, 30) are connected, the first connection end (20) comprises two circular slots (24), concentric to the axial axis (X), which house two O-rings (25), figure 2.

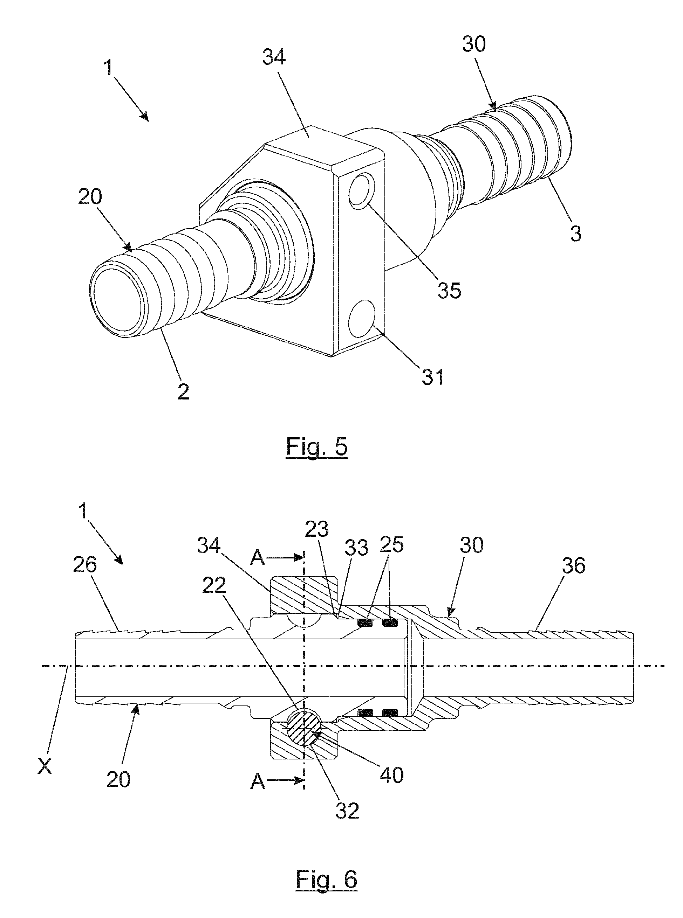

Figure 5 represents a perspective view of the connector, according to a second preferred embodiment, in which the connection between two elements for conveying a fluid that integrate a fastening flange for fixing thereof to the chassis of the vehicle or to any other intermediate fastening point, is shown.

As can be appreciated, the connector (1) comprises:
- a first connection end (20) associated with a first element of a system (in this case a first flexible hose, not shown, for conveying the fluid); and
- a second connection end (30) associated with a second element of the system (in this case a second flexible hose, not shown, for conveying the fluid).

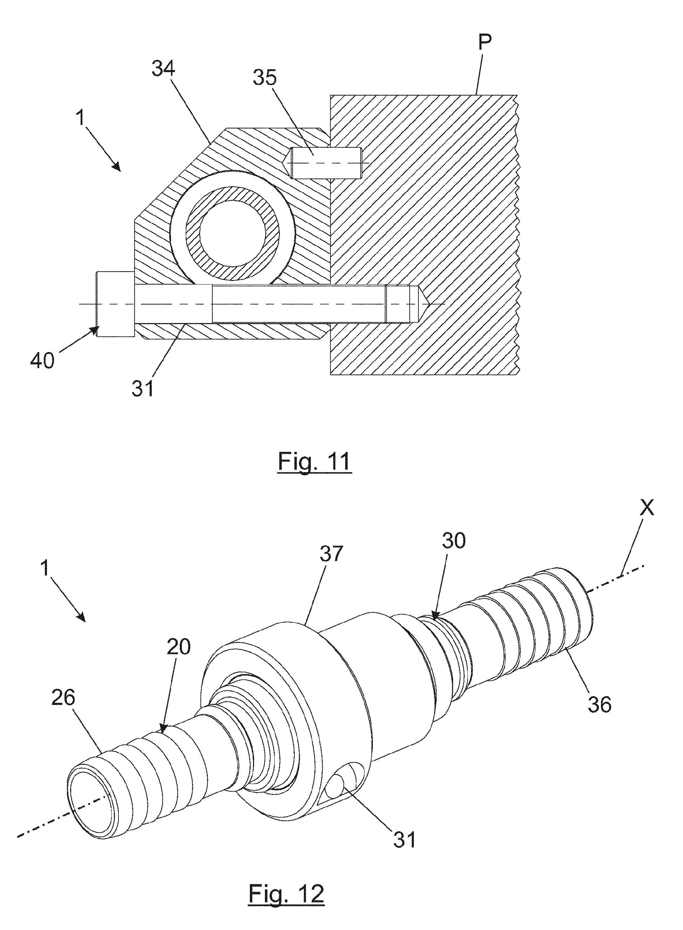

According to this exemplary embodiment, the second connection end (30) comprises an intermediate fastening block (34) with fixing means (35) that make it possible to fix thereof to an intermediate connection point (P), figure 11. In this way, the connector (1) can be fixed to an intermediate connection point (P), such as the frame of a vehicle, so there are any unwanted movements of the connector (1).

Figure 6 shows a longitudinal section of the connector (1) of figure 5, wherein the connection between both connection ends (20, 30) can be appreciated in further detail.

As can be appreciated, the first connection end (20) comprises:
- a circular groove (21), concentric to the axial axis (X), which makes up a first recess (22) having a semicircular transverse cross-section.

Likewise, the second connection end (30) comprises:
- a connector hole (31), perpendicular to the axial axis (X), which makes up a second recess (32) that faces the first recess (22) when both ends (20, 30) are connected; and
- a retaining element (40) designed to be inserted through the connector hole (31) and be housed between the first recess (22) and the second recess (32) to keep the first connection end (20) attached to the second connection end (30) when both ends (20, 30) are connected,

As can be appreciated, the retaining element (40) prevents both connection ends (20, 30) from becoming separated.

The first connecting end (20) comprises a first stop (23) designed to stop the insertion of the first connecting end (20) into the second connecting end (30), and position the first recess (22) facing the second recess (32). In this way, it is possible to ensure that once the first connection end (20) is inserted, both recesses (22, 32) face one another.

The second connection end (30) comprises a second stop (33) designed to stop the insertion of the first connection end (20) into the second connection end (30), and position the first recess (22) facing the second recess (32). Said second stop (33) works together with the first stop (23) to prevent the first connection end from advancing (20).

The first connection end (20) and the second connection end (30) comprise respectively a first attaching terminal (26) and a second attaching terminal (36), both shaped as a pipette, to facilitate the attachment of the first and second flexible hose.

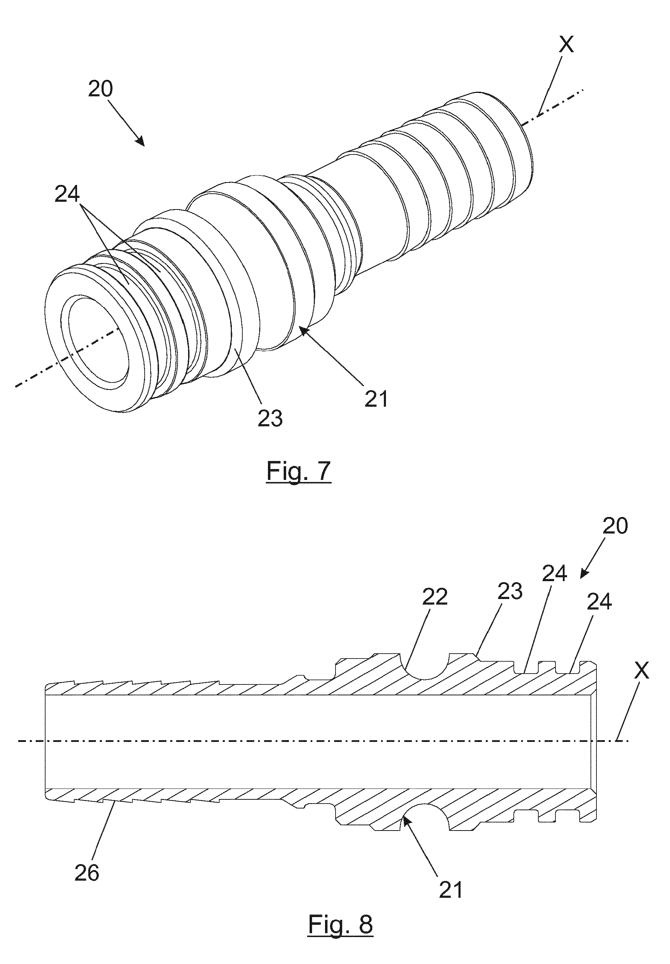

Figures 7 and 8 show two views of the first connection end (20) of figure 5. As can be appreciated, to ensure the air-tightness of the connector (1) when both ends (20, 30) are connected, the first connection end (20) comprises two circular slots (24), concentric to the axial axis (X), which house two O-rings (25), figure 6.

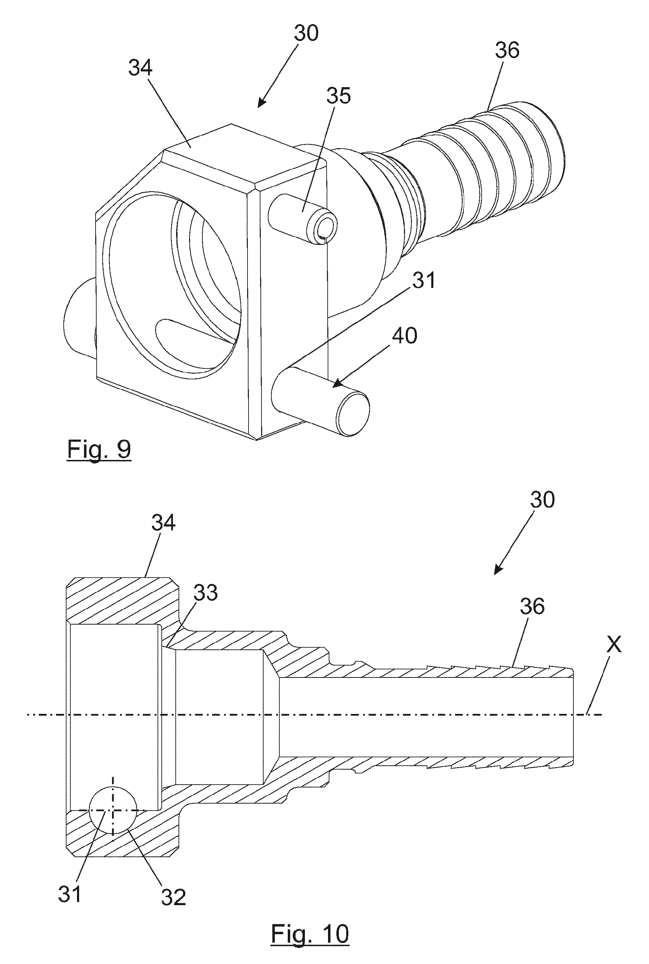

Figures 9 and 10 show two views of the second connection end (30) of figure 5.

Figure 11 shows a transverse cross-section in which can be observed more clearly, how the connector (1) is fixed to the intermediate connection point (P). In order to simplify the design of the connector (1), the connector hole (31) passes through the intermediate fastening block (34) to make it possible fixing the retaining element (40) to the intermediate connection point (P). In other words, the retaining element (40), which prevents itself the connection ends (20, 30) from becoming separated, is also used for fixing the intermediate fastening block (34).

Figure 12 shows a perspective view of the connector, according to a third preferred embodiment, in which the connection between two elements for conveying the fluid that does not require a fastening block for fixing thereof to the chassis of the vehicle or to any other intermediate fastening point of said vehicle.

As can be appreciated, the connector (1) comprises:
- a first connection end (20) associated with a first element of a system (in this case a first flexible hose, not shown, for conveying the fluid); and
- a second connection end (30) associated with a second element of the system (in this case a second flexible hose, not shown, for conveying the fluid).

According to this exemplary embodiment, the second connection end (30) comprises a perimeter widening (37) around the axial axis (X) in which the connector hole (31) is arranged. In this way, the retaining element (40) is better protected and mounted in a more robust manner, thus ensuring a safer connection.

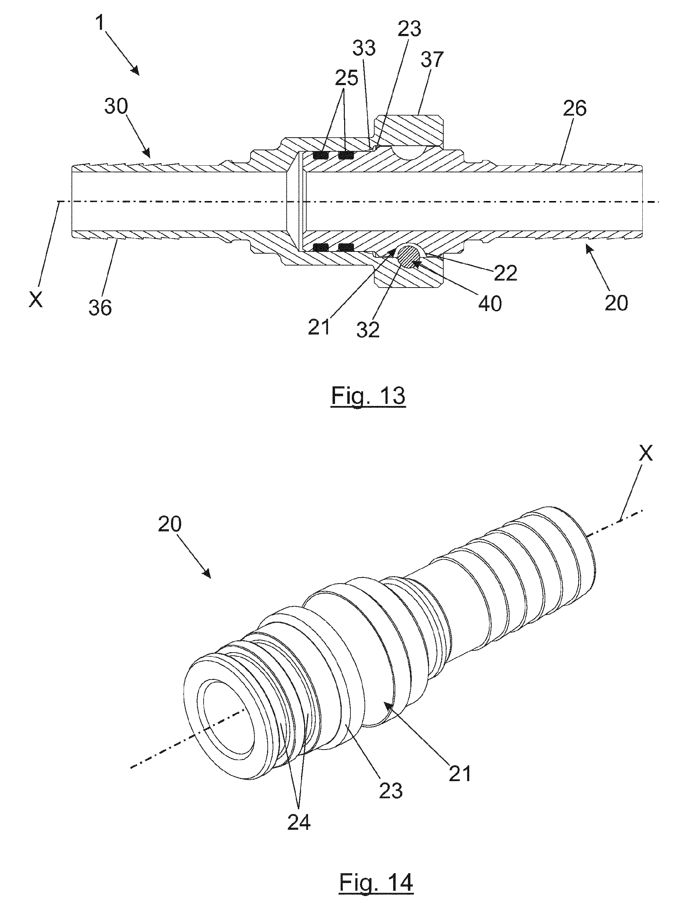

Figure 13 shows a longitudinal section of the connector (1) of figure 12, wherein the connection between both connection ends (20, 30), can be appreciated in further detail.

As can be appreciated, the first connection end (20) comprises:
- a circular groove (21), concentric to the axial axis (X), which makes up a first recess (22) having a semicircular transverse cross-section.

Likewise, the second connection end (30) comprises:
- a connector hole (31), perpendicular to the axial axis (X), which makes up a second recess (32) that faces the first recess (22) when both ends (20, 30) are connected; and
- a retaining element (40) designed to be inserted through the connector hole (31) and be housed between the first recess (22) and the second recess (32) to keep the first connection end (20) attached to the second connection end (30) when both ends (20, 30) are connected.

As can be appreciated, the retaining element (40) prevents both connection ends (20, 30) from becoming separated.

The first connecting end (20) comprises a first stop (23) designed to stop the insertion of the first connecting end (20) into the second connecting end (30), and position the first recess (22) facing the second recess (32). In this way, it is possible to ensure that once the first connection end (20) is inserted, both recesses (22, 32) face one another.

The second connection end (30) comprises a second stop (33) designed to stop the insertion of the first connection end (20) into the second connection end (30), and position the first recess (22) facing the second recess (32). Said second stop (33) works together with the first stop (23) to prevent the first connection end from advancing (20).

The first connection end (20) and the second connection end (30) comprise respectively a first attaching terminal (26) and a second attaching terminal (36), both shaped as a pipette, to facilitate the attachment of the first and the second flexible hoses.

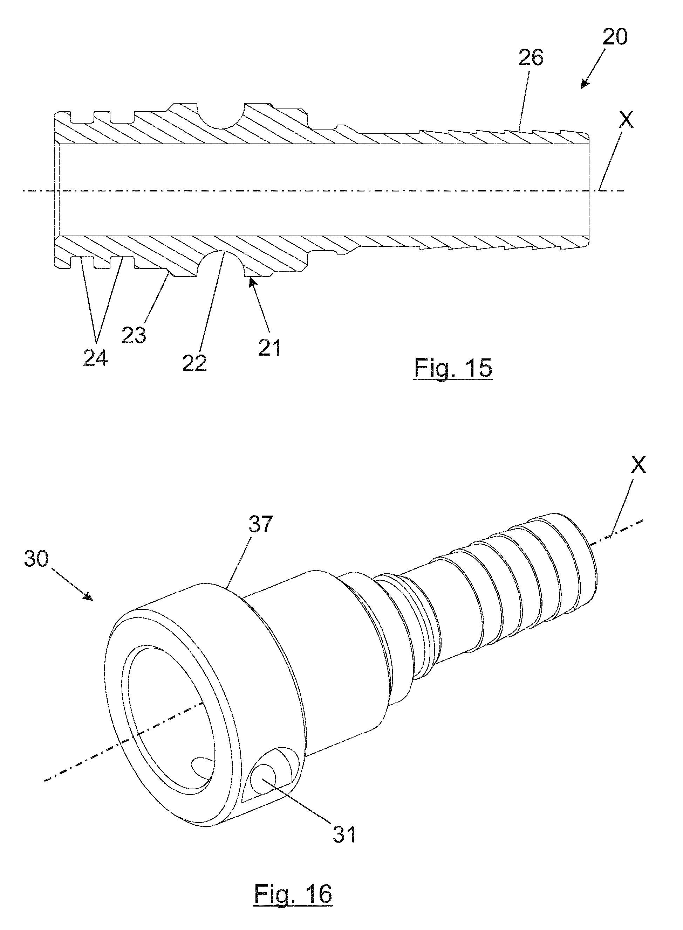

Figures 14 and 15 show two views of the first connection end (20) of figure 12. As can be appreciated, to ensure the air-tightness of the connector (1) when both ends (20, 30) are connected, the first connection end (20) comprises two circular slots (24), concentric to the axial axis (X), which house two O-rings (25), figure 13.

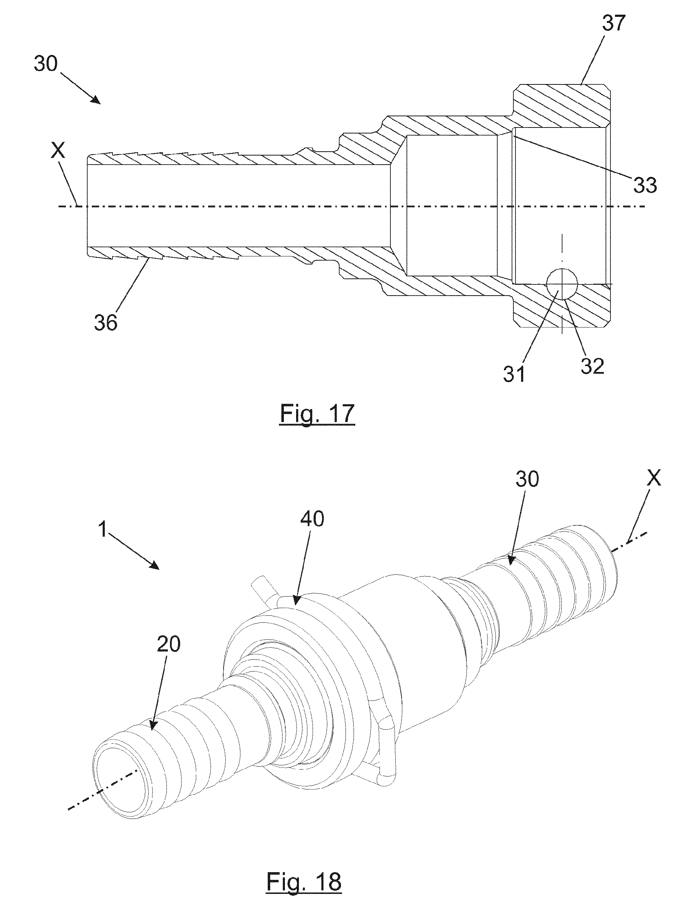

Figures 16 and 17 show two views of the second connection end (30) of figure 12.

Figure 18 shows a perspective view of the connector, according to a fourth preferred embodiment, in which the connection between two elements for conveying a fluid by means of a retaining element (40) of the clamp type, is shown.

As can be appreciated, the connector (1) comprises:
- a first connection end (20) associated with a first element of a system (in this case a first flexible hose, not shown, for conveying the fluid); and
- a second connection end (30) associated with a second element of the system (in this case a second flexible hose, not shown, for conveying the fluid).

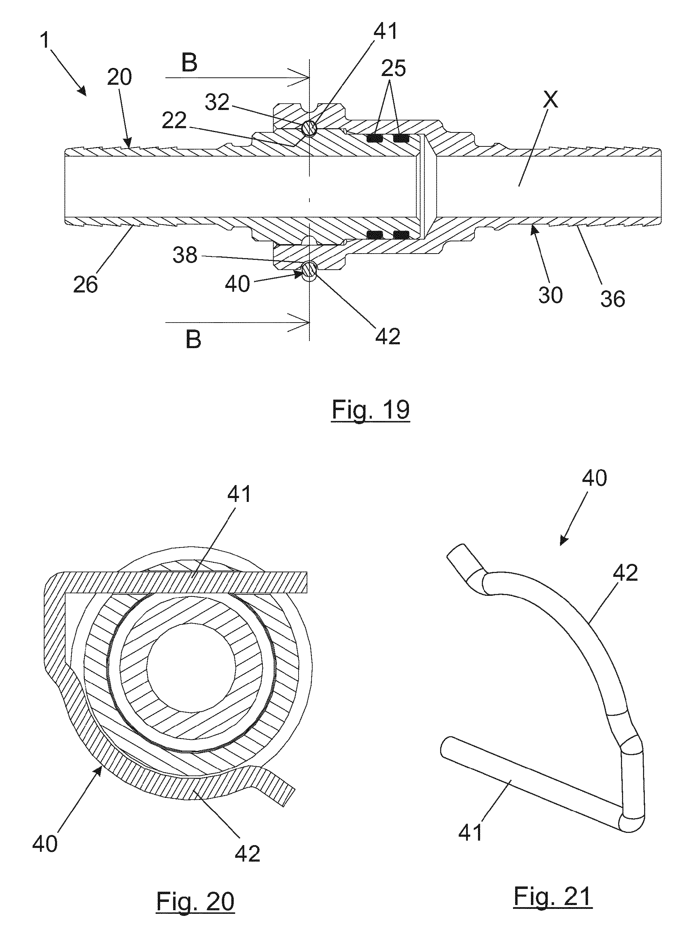

Figure 19 shows a longitudinal section of the connector (1) of figure 18, wherein the connection between both connection ends (20, 30), can be appreciated in further detail.

As can be appreciated, the first connection end (20) comprises:
- a circular groove (21), concentric to the axial axis (X), which makes up a first recess (22) having a semicircular transverse cross-section.

Likewise, the second connection end (30) comprises:
- a connector hole (31), perpendicular to the axial axis (X), which makes up a second recess (32) that faces the first recess (22) when both ends (20, 30) are connected; and
- a retaining element (40) designed to be inserted through the connector hole (31) and be housed between the first recess (22) and the second recess (32) to keep the first connection end (20) attached to the second connection end (30) when both ends (20, 30) are connected.

As can be appreciated, the retaining element (40) prevents both connection ends (20, 30) from becoming separated.

The first connecting end (20) comprises a first stop (23) designed to stop the insertion of the first connecting end (20) into the second connecting end (30), and position the first recess (22) facing the second recess (32). In this way, it is possible to ensure that once the first connection end (20) is inserted, both recesses (22, 32) face one another.

The second connection end (30) comprises a second stop (33) designed to stop the insertion of the first connection end (20) into the second connection end (30), and position the first recess (22) facing the second recess (32). Said second stop (33) works together with the first stop (23) to prevent the first connection end from advancing (20).

The first connection end (20) and the second connection end (30) comprise respectively a first attaching terminal (26) and a second attaching terminal (36), both shaped as a pipette, to facilitate the attachment of the first and second flexible hose.

Figure 20 shows a transverse cross-section in which can be observed more clearly, how the retaining element (40) is arranged relative to the connector (1).

Figure 21 shows a perspective view of the retaining element (40) of figure 18. As can be appreciated, the retaining element (40) comprises a through-end (41) from which an enveloping end (42) extends, making up a clamp or flexible flange, wherein said through-end (41) is designed to be inserted into the connector hole (31), and said enveloping end (42) is designed to press against the first fixing end (20). Likewise, the second connection end (30) comprises a third recess (38) designed to receive the enveloping end (42), and work together with the same to secure the position of the retaining element (40), figure 19.

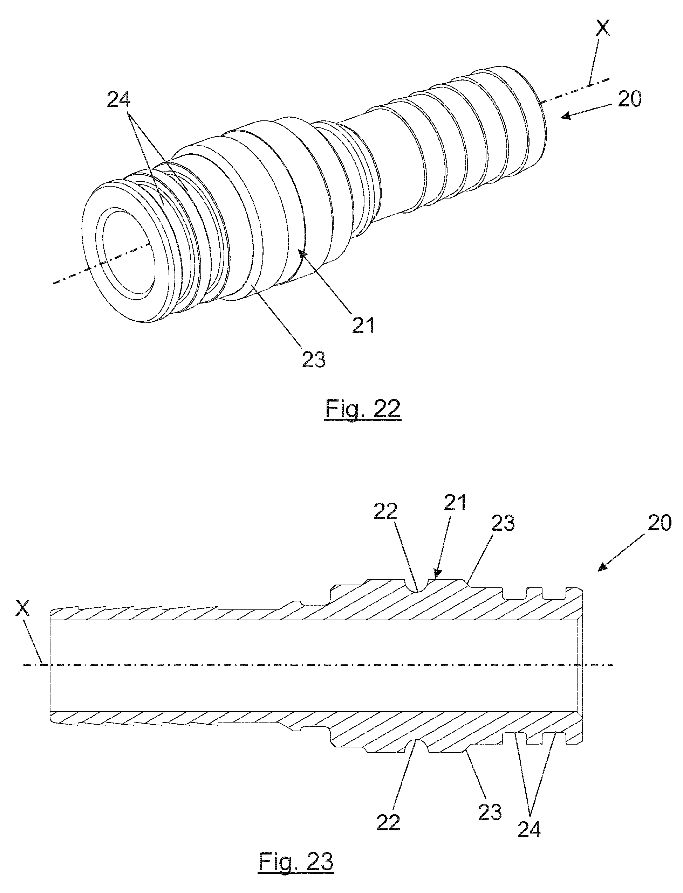

Figures 22 and 23 show two views of the first connection end (20) of figure 12. As can be appreciated, in order to ensure the air-tightness of the connector (1) when both ends (20, 30) are connected, the first connection end (20) comprises two circular slots (24), concentric to the axial axis (X), which house two O-rings (25), figure 19.

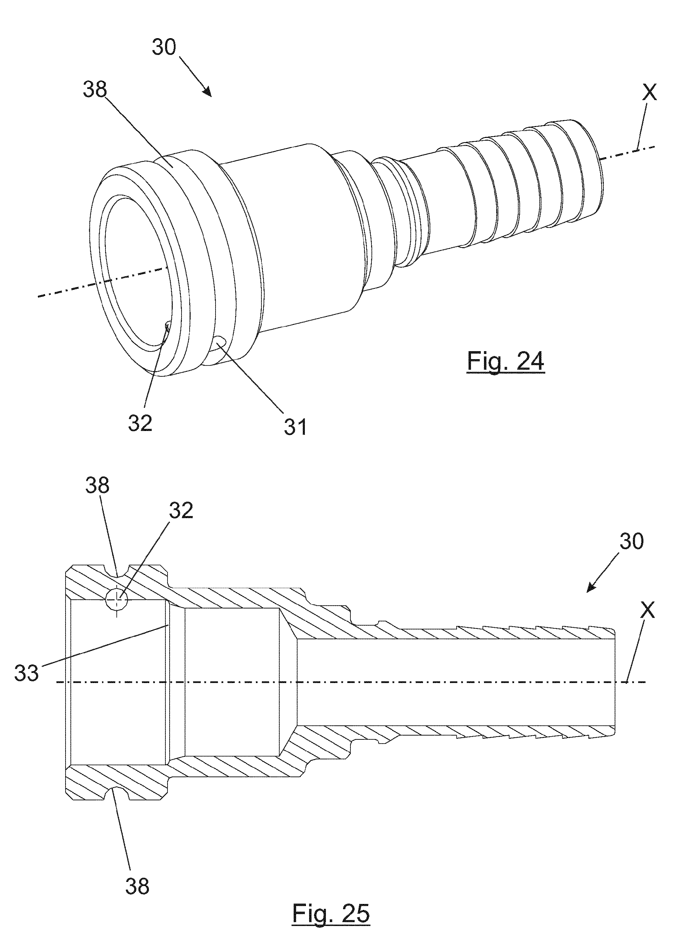

Figures 23 and 24 show two views of the second connection end (30) of figure 18.

## Claims

1. A connector for fluid conduction, comprising:
• a first connection end (20) associated with a first element of a system; and
• a second connection end (30) associated with a second element of the system; wherein the first connection end (20) is designed to be inserted into the second connection end (30), according to an axial axis (X), to connect both ends (20, 30);
said connector (1) being **characterized in that** the first connection end (20) comprises:
• a circular groove (21), concentric to the axial axis (X), which makes up a first recess (22);
and **in that** the second connection end (30) comprises:
• a connector hole (31), perpendicular to the axial axis (X), which makes up a second recess (32) facing the first recess (22) when both ends (20, 30) are connected; and
• a retaining element (40) designed to be inserted through the connector hole (31) and be housed between the first recess (22) and the second recess (32) to keep the first connection end (20) attached to the second connection end (30) when both ends (20, 30) are connected.

2. The connector for fluid conduction according to claim 1 **characterized in that** the first connection end (20) comprises a first stop (23) designed to stop the insertion of the first connection end (20) into the second connection end (30), and position the first recess (22) facing the second recess (32).

3. The connector for fluid conduction according to any of the claims 1 to 2 **characterized in that** the first connection end (20) comprises one or more circular slots (24), concentric to the axial axis (X), which house one or more O-rings (25) in order to ensure the air-tightness of the connector (1) when both ends (20, 30) are connected.

4. The connector for fluid conduction according to any of the claims 1 to 3 **characterized in that** the first connection end (20) comprises a first pipette-shaped attaching terminal (26) to facilitate the attachment of a flexible hose.

5. The connector for fluid conduction according to any of the claims 1 to 4 **characterized in that** the second connection end (30) comprises a second stop (33) designed to stop the insertion of the first connection end (20) into the second connection end (30), and position the first recess (22) facing the second recess (32).

6. The connector for fluid conduction according to any of the claims 1 to 5 **characterized in that** the second connection end (30) comprises an intermediate fastening block (34) with fixing means (35), which make it possible to fix thereof to an intermediate connection point (P).

7. The connector for fluid conduction according to claim 6 **characterized in that** the connector hole (31) passes through the intermediate fastening block (34) to make it possible to fix the retaining element (40) to the intermediate connection point (P).

8. The connector for fluid conduction according to any of the claims 1 to 7 **characterized in that** the second connection end (30) comprises a second pipette-shaped attaching terminal (36) to facilitate the attachment of a flexible hose.

9. The connector for fluid conduction according to any of the claims 1 to 8 **characterized in that** the second connection end (30) comprises a perimeter widening (37) around the axial axis (X) in which the connector hole (31) is arranged.

10. The connector for fluid conduction according to any of the claims 1 to 9 **characterized in that** the retaining element (40) comprises a through-end (41) from which an enveloping end (42) that makes up a flexible clamp extends, wherein said through-end (41) is designed to be inserted into the connector hole (31), and said enveloping end (42) is designed to press against the first fixing end (20).

11. The connector for fluid conduction according to claim 10 **characterized in that** the second connection end (30) comprises a third recess (38) designed to receive the enveloping end (42).
